(19) Europäisches Patentamt
European Patent Office
Office européen des brevets

(11) **EP 1 065 849 B1**

(12) **FASCICULE DE BREVET EUROPEEN**

(45) Date de publication et mention
de la délivrance du brevet:
**09.04.2003 Bulletin 2003/15**

(51) Int Cl.⁷: **H04L 23/02**, H04J 11/00

(21) Numéro de dépôt: **00401816.4**

(22) Date de dépôt: **26.06.2000**

(54) **Procédé de transmission à modulation/démodulation multi-MOK**

Übertragungsverfahren für multi-MOK Modulation/Demodulation

Transmission method for multi-MOK modulation/demodulation

(84) Etats contractants désignés:
**DE GB IT**

(30) Priorité: **29.06.1999 FR 9908308**

(43) Date de publication de la demande:
**03.01.2001 Bulletin 2001/01**

(73) Titulaire: **COMMISSARIAT A L'ENERGIE
ATOMIQUE
75752 Paris Cédex 15 (FR)**

(72) Inventeurs:
• **Lequepeys, Jean-René
38600 Fontaine (FR)**
• **Nouguet, Dominique
38100 Grenoble (FR)**
• **Ouvry, Laurent
F-38100 Grenoble (FR)**
• **Varreau, Didier
F-38450 St Georges de Commiers (FR)**

(74) Mandataire: **Poulin, Gérard et al
BREVALEX
3, rue du Docteur Lancereaux
75008 Paris (FR)**

(56) Documents cités:
EP-A- 0 865 181     WO-A-96/05668
US-A- 5 692 007

**Description**

**Domaine technique**

La présente invention a pour objet un procédé de transmission à modulation/démodulation multi-MOK, ainsi qu'un émetteur et un récepteur correspondants.

L'invention trouve une application générale dans les communications numériques et plus particulièrement dans les réseaux locaux sans fil (WLAN), dans les boucles locales d'abonnés sans fil (WLL), en téléphonie mobile, en domotique et en télécollecte, en communication dans les transports, en télévision câblée et en service multimédia sur les réseaux câblés, etc...

**Etat de la technique antérieure**

L'invention relève de la technique d'étalement de spectre. On sait que cette technique consiste en la modulation d'un symbole numérique à transmettre par une séquence pseudo-aléatoire connue de l'utilisateur. Chaque séquence est composée de N éléments appelés "chips", dont la durée est le N$^{ième}$ de la durée d'un symbole. Il en résulte un signal dont le spectre s'étale sur une plage N fois plus large que celle du signal original. A la réception, la démodulation consiste à corréler le signal reçu avec la séquence utilisée à l'émission pour retrouver le symbole de départ.

Les avantages de cette technique sont nombreux :

- discrétion, puisque la puissance du signal émis étant constante et répartie dans une bande N fois plus large, sa densité spectrale de puissance est réduite d'un facteur N ;
- immunité vis-à-vis des émissions à bande étroite volontaires ou parasites, l'opération de corrélation réalisée au niveau du récepteur conduisant à l'étalement spectral de ces émissions ;
- difficulté d'interception (pour les rapports signal à bruit usuels), puisque la démodulation requiert la connaissance de la séquence utilisée à l'émission ;
- résistance aux trajets multiples qui, sous certaines conditions, provoquent des évanouissements sélectifs en fréquence et donc n'affectent que partiellement le signal émis ;
- possibilité d'un accès multiple à répartition par les codes (AMRC) ou CDMA en anglais pour "Code Division Multiple Access" : plusieurs liaisons à étalement de spectre par séquence directe peuvent partager la même bande de fréquence en utilisant des codes d'étalement orthogonaux.

Mais cette technique présente un inconvénient qui est sa faible efficacité spectrale. On désigne par 1à le rapport entre le débit en données binaires et la largeur de la bande occupée. Si chaque symbole de données contient m bits, le débit en données binaires est égal à m fois le débit en symboles, soit mDs. Quant à la bande occupée, elle est égale au double de la fréquence en "chips", c'est-à-dire à 2N fois le débit en symboles, soit 2NDs. On a donc, finalement, une efficacité spectrale égale au rapport $\frac{mDs}{2NDs}$, soit $\frac{m}{2N}$.

On pourrait penser augmenter l'efficacité spectrale en diminuant N, mais cela irait à l'encontre des qualités propres à l'étalement et, notamment, nuirait à l'immunité des transmissions. On pourrait aussi penser augmenter le débit en symboles, mais le phénomène d'interférences entre symboles irait en s'aggravant.

Une autre solution consisterait à augmenter m, nombre de données binaires par symbole, ce qui conduirait à utiliser des modulations complexes, dites d'ordre supérieur. La présente invention emprunte en effet cette voie. On peut donc rappeler en quoi consistent ces modulations, et principalement deux d'entre elles à savoir la modulation dite PSK ou "Phase Shift Keying", qui est une modulation (ou un codage) de phase, et la modulation dite MOK pour "M-ary Orthogonal Keying" ou modulation orthogonale d'ordre M.

On peut trouver une description de ces modulations dans deux ouvrages généraux :

- Andrew J. VITERBI : "CDMA-Principles of Spread Spectrum Communication" Addison-Wesley Wireless Communications Series, 1975,
- John G. PROAKIS : "Digital Communications" McGraw-Hill International Editions, 3$^{ème}$ édition, 1995.

S'agissant tout d'abord de la modulation de phase, on rappelle qu'il s'agit le plus souvent d'une modulation binaire, notée BPSK, ou quaternaire, notée QPSK. Dans le premier cas, on peut coder des symboles à un élément binaire (m=1) et dans le second des symboles à deux éléments binaires (m=2).

Ces modulations sont le plus souvent mises en oeuvre sous leur forme différentielle (DBPSK), DQPSK), qui assure une bonne robustesse dans les canaux difficiles, dès lors qu'aucune boucle de récupération de phase n'est nécessaire. Cette forme différentielle est aussi très bien adaptée au traitement de la diversité des trajets de propagation.

A la réception, un démodulateur différentiel effectue la multiplication entre le signal à démoduler et sa version retardée d'une période symbole. Dans le cas de la modulation quaternaire, on utilise deux voies de signal, une voie qui traite la composante du signal en phase avec une porteuse et une autre voie qui traite la composante en quadrature avec la porteuse.

S'agissant maintenant de la modulation MOK, il s'agit d'une technique dans laquelle on associe à chaque symbole à émettre un signal pris parmi un ensemble de signaux orthogonaux. Ces signaux peuvent être des codes d'étalement d'une même famille de codes orthogonaux. Dans ce cas, la modulation réalise aussi l'étalement. Mais ces signaux peuvent aussi ne pas être parfaitement orthogonaux car la contrainte d'orthogonalité est moins forte qu'il n'y paraît. Mais naturellement dans ce cas les performances sont moins bonnes.

Si un symbole est constitué de m bits, il existe $2^m$ configurations possibles pour les différents symboles. Le nombre M de codes disponibles doit donc être au moins égal à $2^m$. Or, si la longueur de ces codes est N, on sait qu'on peut trouver N codes orthogonaux. On a donc M=N et le nombre de bits par symbole est limité à $\log_2 N$.

La technique MOK connaît une variante dite MBOK ("M-ary Bi-Orthogonal Keying") consistant à ajouter au jeu de signaux orthogonaux utilisés dans une modulation MOK leurs opposés pour constituer un jeu de 2M signaux, qui ne sont évidemment plus tous orthogonaux entre eux. La démodulation utilise encore M corrélateurs, adaptés à chacun des M codes orthogonaux, mais nécessite en outre des moyens de récupération du signe.

Ces techniques MOK et MBOK sont décrites par exemple dans le document WO-A-96 05668.

En technique MOK, si, pour augmenter l'efficacité spectrale, on augmentait d'une unité le nombre m d'éléments binaires dans chaque symbole, le nombre M de codes nécessaires serait doublé, ce qui multiplierait par 2 le nombre de voies du récepteur. La complexité s'accroît donc plus vite que l'efficacité spectrale. Cette technique présente donc certaines limites.

Les modulations MOK et MBOK sont utilisées dans certains systèmes de communications numériques, en liaison avec une structure de réception cohérente, laquelle nécessite la connaissance de la phase de la porteuse. L'envoi d'un préambule, avant l'émission des données utiles, est un procédé classique permettant l'estimation de cette phase. Cependant, dans les canaux soumis à des évanouissements et/ou à des trajets multiples, la phase de la porteuse subit des variations qui peuvent être rapides et que le système de réception doit détecter et compenser. Cela s'obtient généralement par l'émission périodique de préambules qui occupent alors le canal et entraînent une diminution du débit de données utiles. Selon ce schéma, les durées du préambule et du paquet de données utiles doivent être inférieures au temps de cohérence du canal (temps pendant lequel le canal est considéré comme étant stationnaire). De plus, la complexité de la structure de réception est accrue.

Pour ces raisons, l'homme de l'art préfère avoir recours à des schémas de démodulation non cohérente, ou différentiellement cohérente, qui ne nécessitent pas la connaissance de l'information de phase. Ces techniques éliminent le recours aux préambules longs, aux estimateurs de phase et aux dérotateurs de phase, au prix d'une légère perte de stensibilité. Par ailleurs, la démodulation non cohérente simplifie très fortement le traitement de la diversité des trajets de propagation puisque chaque trajet possède, entre autres, sa propre phase (et donc nécessiterait son propre estimateur de phase dans un schéma cohérent).

La présente invention vise encore à augmenter l'efficacité spectrale des liaisons en évitant les inconvénients mentionnés plus haut et en tirant profit des avantages de la démodulation non cohérente.

**Exposé de l'invention**

A cette fin, l'invention préconise de multiplier les opérations de modulation/démodulation MOK pour traiter une pluralité de blocs de données constitués à partir des données à transmettre. Naturellement, cela accroît le nombre de codes, mais, comme on le comprendra mieux par la suite, cela accroît aussi et très sensiblement, le débit d'informations. Dans l'art antérieur, en doublant par exemple le nombre de codes on augmentait seulement le nombre de bits transmis d'une unité, alors que, dans l'invention, en doublant le nombre de codes, on double le débit.

De façon précise, l'invention a donc pour objet un procédé de transmission de données, caractérisé en ce que :

    a) à l'émission :

- on divise les données à transmettre en N blocs de données,
- on traite en parallèle ces N blocs dans N voies de modulation orthogonale d'ordre M (MOK), chaque modulation utilisant une famille de codes d'étalement, chaque voie délivrant un signal,
- on émet en série l'ensemble de ces signaux,

    b) à la réception :

- on traite en parallèle le signal reçu dans N voies de démodulation orthogonale d'ordre M (MOK) ce qui donne N blocs de données,

■ on regroupe en série ces N blocs de données pour restituer les données transmises.

La modulation et la démodulation MOK peuvent consister en une modulation et une démodulation de type classique ou de type bi-orthogonal d'ordre M (MBOK). Elles peuvent aussi consister en une modulation/démodulation orthogonale d'ordre M combinées à une modulation/démodulation de phase (PSK). Cette dernière peut être éventuellement de type différentiel (DPSK).

Le nombre de codes d'étalement peut être le même dans chaque famille. Il peut être également différent d'une famille à l'autre. Ces nombres peuvent être avantageusement une puissance de 2.

La présente invention a également pour objet un émetteur pour la mise en oeuvre de la phase émission de ce procédé et un récepteur pour la mise en oeuvre de la phase réception.

Pour souligner le caractère multiple du procédé, et le lien avec la technique MOK, le Demandeur désigne sa technique par multi-MOK (M-MOK en abrégé).

**Brève description des dessins**

- la figure 1 est un schéma synoptique d'un émetteur conforme à l'invention
- la figure 2 est un schéma synoptique d'un récepteur conforme à l'invention
- la figure 3 est un schéma d'un émetteur à deux voies utilisant la technique mixte MOK-DPSK ;
- la figure 4 est un schéma d'un récepteur correspondant ;
- la figure 5 est un schéma général d'un émetteur à N voies de type MOK-PSK ;
- la figure 6 est un schéma général d'un récepteur correspondant.

**Description de modes particuliers de mise en oeuvre**

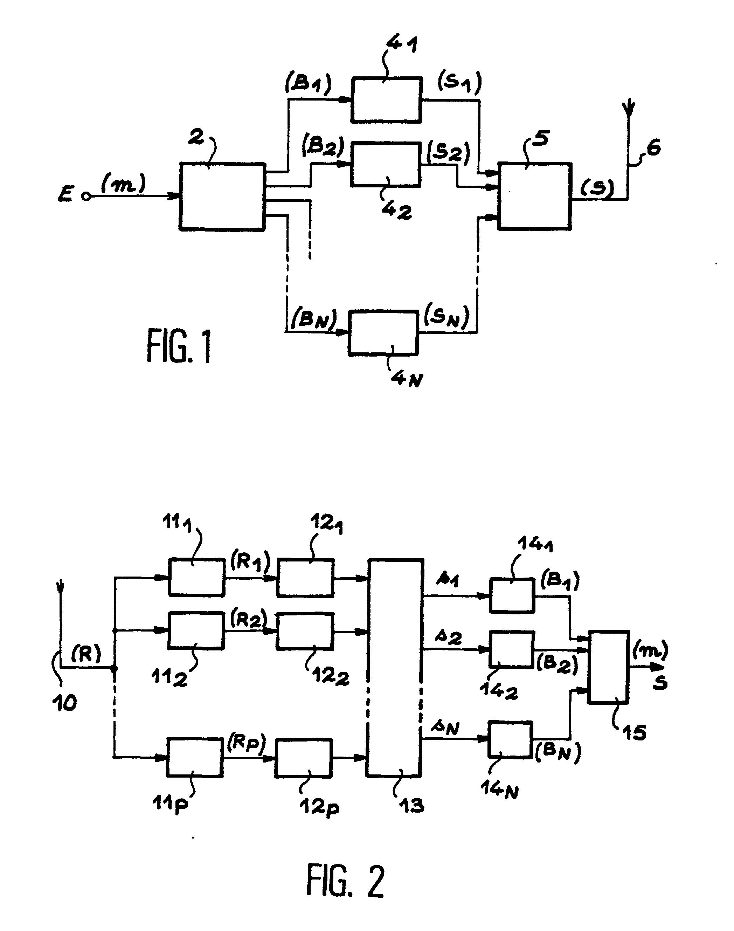

Sur la figure 1 est représenté schématiquement un émetteur conforme à l'invention. Tel que représenté, il comprend une entrée générale E recevant les données à transmettre (il s'agit en général de symboles comprenant un ou plusieurs bits). On suppose qu'un paquet de ces données comprend m bits. Ces données sont divisées en N blocs $B_1$, $B_2$, ..., $B_N$ par un circuit 2 du type convertisseur série/parallèle. Ces N blocs comprennent respectivement $m_1$, $m_2$, ..., $m_N$ bits, ces nombres pouvant être égaux, mais pas nécessairement. L'émetteur comprend encore N moyens de modulation MOK respectivement $4_1$, $4_2$, ..., $4_N$. Chacun de ces moyens comprend une famille de codes d'étalement en nombre suffisant pour traiter le bloc qu'il reçoit. Comme il a été indiqué dans l'exposé de l'état de la technique, pour traiter un bloc de $m_i$ bits il faut $2^{m_i}$ codes pour une modulation MOK classique. Puisqu'il y a N familles de codes, le nombre total P de codes utilisé dans l'émetteur est :

$$P = \sum_{i=1}^{N} 2^{m_i}$$

Si tous les blocs sont constitués d'un même nombre de bits, soit $m_u$, et si aucun code n'est utilisé plusieurs fois, l'émetteur utilise $P = N.2^{m_u}$ codes et il est capable de traiter $N \times m_u$ bits.

Inversement, étant donné le nombre total P de codes et le nombre N de familles, le nombre $m_u$ de bits par bloc est :

$$m_u = \log_2(P/N)$$

et le nombre total de bits transmis est :

$$m = \sum_{u} m_u \ ,$$

c'est-à-dire $N\log_2(P/N)$ si tous les blocs ont le même nombre de bits.

On voit que pour multiplier le débit par N, il suffit de multiplier le nombre de codes par N. Si N=2, on double le débit en doublant le nombre de codes, alors que dans l'art antérieur en doublant le nombre de codes on ne faisait qu'ajouter un bit. Le gain en débit est donc considérable.

Pour en revenir à l'émetteur de la figure 1, les moyens $4_1$, $4_2$, ..., $4_N$ délivrent des signaux $S_1$, $S_2$, ..., $S_N$ (qui sont les codes d'étalement choisis en fonction des blocs à transmettre). Ces signaux sont appliqués à un circuit 5 du type convertisseur parallèle-série, dont la sortie est reliée à des moyens d'émission 6.

La figure 2 représente un récepteur correspondant. Tel que représenté, ce récepteur comprend des moyens de réception 10, qui délivrent un signal R, lequel est traité dans une batterie de P filtres $11_1$, $11_2$, ..., $11_P$ pouvant être considérés comme répartis en N familles de filtres, ces filtres étant adaptés aux codes d'étalement des différentes familles utilisés à l'émission. Chacun de ces filtres reçoit le signal R et délivre un signal filtré $R_1$, $R_2$ ..., $R_P$.

Ces filtres sont suivis d'autant de moyens $12_1$, $12_2$, ..., $12_P$ d'estimation de l'énergie (ou de l'amplitude) des signaux filtrés et d'un circuit 13 apte à déterminer, dans chacune des N familles de signaux, quel signal possède la plus grande énergie (ou amplitude). Le circuit 13 possède N sorties $s_1$, $s_2$, ..., $s_N$ délivrant chacune le rang du signal de plus grande énergie. Ces sorties sont reliées à N tables de codes $14_1$, $14_2$, ..., $14_N$ qui permettent de retrouver les N codes correspondant à ces N rangs et de délivrer les N blocs de données correspondants $B_1$, $B_2$, ..., $B_N$. Le récepteur se complète par un circuit 15 de type convertisseur parallèle-série, qui restitue, sur une sortie générale S, les données transmises (sur m bits).

La présente invention peut être exploitée dans le cadre d'une technique PSK et MOK particulière dite DP-MOK. Cette technique a fait l'objet de la demande de brevet français n°98 11564 déposée le 16 septembre 1998 par le présent Demandeur, mais qui ne fait pas partie de l'état de la technique à prendre en compte pour l'appréciation de l'activité inventive de la présente invention. Dans cette technique DP-MOK, une partie des bits de chaque symbole est transmise selon la technique MOK et une autre partie selon la technique DPSK avec étalement de spectre par la séquence choisie pour la technique MOK. En réception, on restitue d'abord la séquence utilisée à l'émission par filtrages parallèles adaptés et l'on restitue ainsi une partie des bits du symbole. On démodule différentiellement le signal filtre approprié pour retrouver l'autre partie des bits.

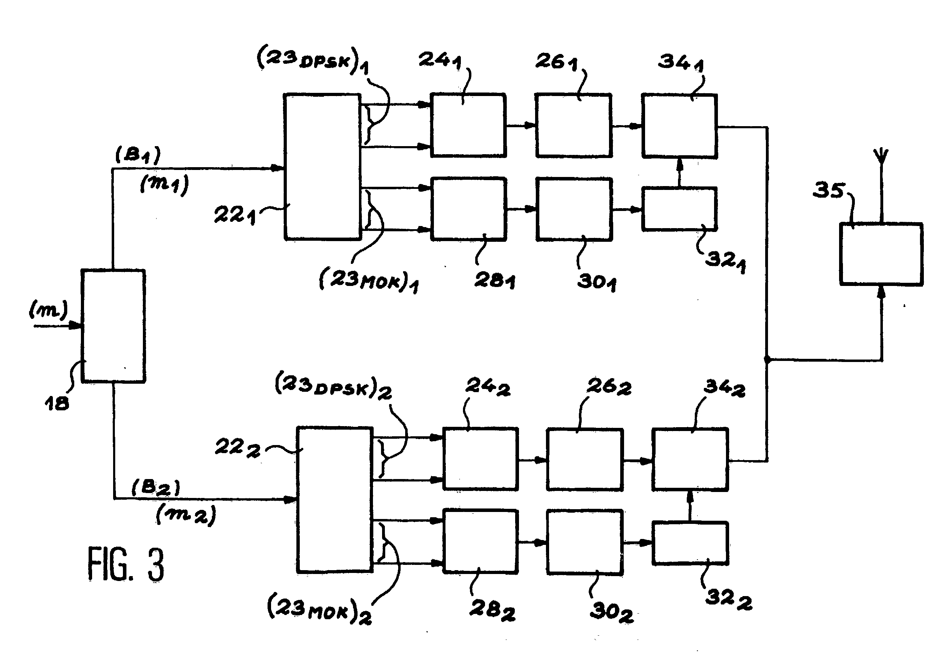

La figure 3 montre un mode de réalisation d'un émetteur utilisant cette technique DP-MOK dans le cas particulier où l'on utilise deux voies (N=2). Les deux voies comprennent les mêmes moyens repérés par des références indicées 1 pour la première et 2 pour la seconde. On ne décrira que la première, la seconde s'en déduisant immédiatement.

Les données à transmettre (m bits) sont converties en parallèle par un convertisseur série-parallèle 18 qui délivre deux blocs $B_1$ et $B_2$ de même nombre de bits $m_1$ et $m_2$. La première voie comprend :

- des moyens $22_1$ pour diviser les m bits de $B_1$ en un premier sous-groupe $(23_{MOK})_1$ de $(m_{MOK})_1$ bits et en un second sous-groupe $(23_{DPSK})_1$ de $(m_{DPSK})_1$ bits avec $m_1=(m_{MOK})_1+(m_{DPSK})_1$ ;
- un circuit $28_1$ de conversion recevant les $(m_{mok})_1$ bits et les convertissant en une adresse dirigée vers une table de codes $30_1$, laquelle comprend 2 à la puissance $(m_{MOK})_1$) codes d'étalement orthogonaux (ou sensiblement orthogonaux) et finalement un générateur $32_1$ du code $(C_i)_1$ d'étalement choisi ;
- un circuit d'encodage différentiel $24_1$, essentiellement constitué d'un multiplieur logique et d'un circuit à retard ;
- un modulateur PSK référencé $26_1$ ;
- un circuit d'étalement de spectre $34_1$ travaillant avec le code $(C_i)_1$ délivré par le générateur $32_1$ et l'appliquant au signal modulé délivré par le modulateur $26_1$.

L'émetteur comprend encore un étage radiofréquence 35 relié aux deux voies et suivi d'une antenne d'émission.

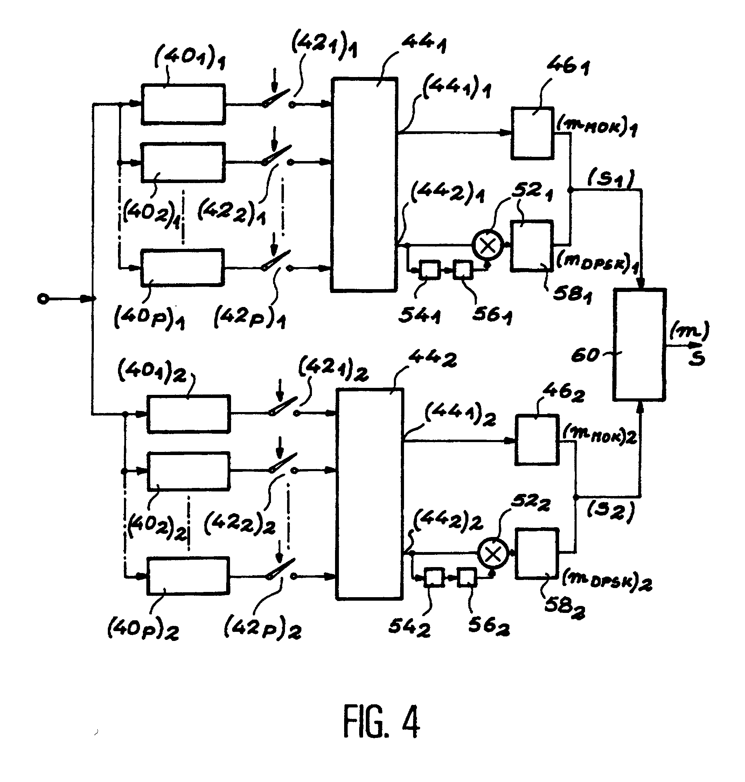

Le récepteur correspondant est représenté sur la figure 4. Tel que représenté, il comprend deux voies identiques dont seule la première sera décrite. Cette voie comprend :

- P filtres $(40_1)_1$, $(40_2)_1$, ..., $(40_P)_1$ adaptés aux P codes d'étalement utilisables à l'émission, ces filtres recevant le signal en bande de base ;
- P échantilleurs $(42_1)_1$, $(42_2)_1$, ..., $(42_P)_1$ commandés par un signal de synchronisation ;
- des moyens $44_1$ pour déterminer le signal filtré qui a la plus grande énergie (ou amplitude) (maximum du carré du module), ces moyens possédant une première sortie $(44_1)_1$ véhiculant le numéro de la voie correspondant au signal maximum, et une seconde sortie $(44_2)_1$ délivrant ce signal proprement dit ;
- un circuit $46_1$ relié à la première sortie et qui, à partir du numéro de la voie correspondant au signal de plus forte amplitude délivre les $(m_{MOK})_1$ données ;
- un circuit de multiplication retardée relié à la seconde sortie $(44_2)_1$ et constitué d'un multiplieur $52_1$ d'un circuit $54_1$ inversant la phase et d'un circuit à retard $56_1$ ;
- un démodulateur PSK $58_1$ délivrant les données $(m_{DPSK})_1$ ;
- les données $(m_{MOK})_1$ et $(m_{DPSK})_1$ étant alors regroupées pour reconstituer le symbole transmis $S_1$.

Le récepteur se complète par un convertisseur parallèle-série 60 qui regroupe les signaux $S_1$ et $S_2$ et redonne les m bits transmis.

L'opération de sélection du signal maximum prend un certain temps. Comme cette opération sert à diriger une des entrées vers la sortie (commutation de voie), il est indispensable de retarder les voies d'une durée correspondant, car la commutation doit se faire exactement sur l'information servant à la sélection de voies. De telles opérations de retard sont habituelles dans de telles techniques et ne sont pas représentées.

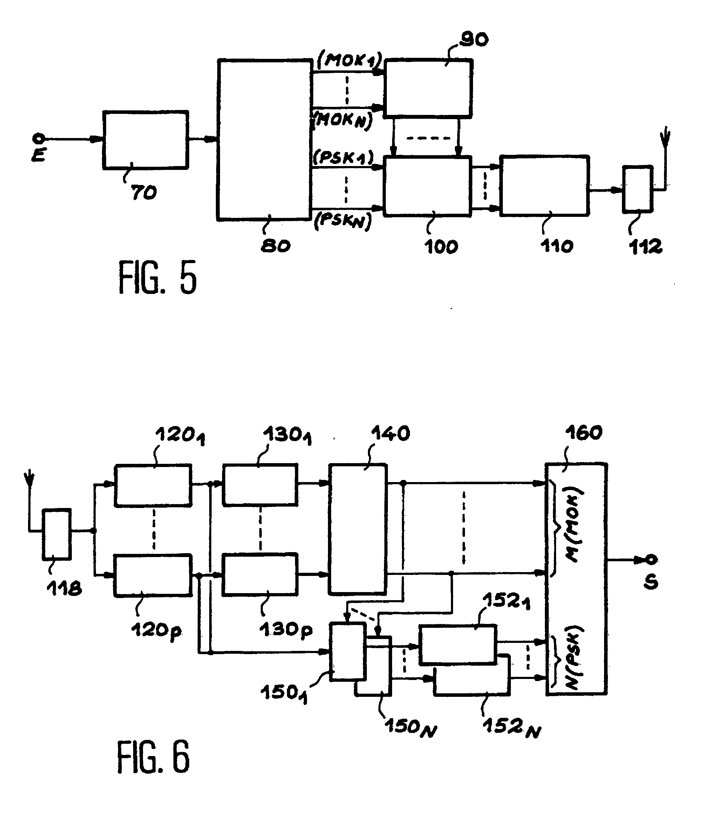

Les figures 3 et 4 sont analytiques, pour permettre une meilleure compréhension de ce mode particulier de réalisation. Mais, dans la pratique, les circuits peuvent être plus synthétiques comme l'illustrent les figures 5 et 6. Ces figures se rapportent à une technique PSK.

La figure 5 montre un émetteur avec une entrée E, un convertisseur série/parallèle 70, un circuit 8 de découpage en N blocs MOK et N blocs PSK, une table 90 de P codes recevant sur N entrées les N blocs MOK, un circuit 100 recevant les N codes sélectionnés dans la table 90 et étalant les N blocs PSK, un circuit 110 combinant les N signaux étalés $S_1$, ..., $S_N$, et enfin des moyens d'émission 112.

La figure 6 montre un récepteur avec des moyens de réception 118, une batterie de P filtres adaptés $120_1$, ..., $120_P$, une batterie de P circuits d'estimation de l'énergie $130_1$, ..., $130_P$ des signaux filtrés, un circuit 140 recevant les P estimations et délivrant sur N sorties les N numéros des voies véhiculant les N signaux de plus grande énergie, N circuits $150_1$, ..., $150_N$ aptes à choisir la voie correspondant au numéro qui lui est adressé, N démodulateurs PSK $152_1$, ..., $152_N$, un circuit 160 de mise en forme recevant sur N premières entrées N blocs MOK et sur N secondes entrées N blocs PSK, ce circuit délivrant, sur une sortie générale S, les données transmises.

Pour finir, on peut calculer le débit de données obtenu selon l'invention pour quelques cas particuliers.

On suppose, dans une première série d'exemples, que tous les codes sont distincts. Soit P le nombre total de codes disponibles. Pour que les N codes utilisés simultanément soient distincts, on sélectionne, à l'émission, un code parmi un groupe de P/N codes.

Le nombre de bits MOK pour chaque voie est :

$$(m_{MOK})_u = \log_2 P/N$$

Soit $(m_{PSK})_u$ le nombre de bits PSK sur chaque voie. Le nombre de bits émis par symbole est :

$$m = m_{MOK} + m_{PSK} = N.\{\log_2 P./N + (m_{PSK})_u\}$$

Le tableau 1 donne quelques exemples numériques des modulations MOK (N=1) (art antérieur) et M-MOK (N>1) (invention avec $m_{PSK}$=2(QPSK).

| | P=8 | P=16 |
|---|---|---|
| N=1 (MOK) | $m_{MOK}$=3 **m=5 bits/symb** | $m_{MOK}$=4 **m=6 bits/symb** |
| N=2 (M-MOK) | $m_{MOK}$=2 **m=8 bits/symb** | $m_{MOK}$=3 **m=10 bits/symb** |
| N=4 (M-MOK) | $m_{MOK}$=1 **m=12 bits/symb** | $m_{MOK}$=2 **m=16 bits/symb** |
| N=8 (M=MOK) | --- | $m_{MOK}$=1 **m=24 bits/symb** |

Dans les exemples précédents, on a supposé que tous les codes étaient distincts. Mais on peut s'autoriser à réutiliser un même code. Un code spécial doit alors être associé à chaque code pour que les codes transmis sur le canal soient toujours distincts. On doit donc disposer de P codes plus un code spécial. Pour simplifier, on prendre N=2.

Les voies utilisées sont alors choisies parmi P et non plus parmi P/2. Par conséquent, le nombre de bits MOK transmis est :

$$m_{MOK}=2.\log_2 P \text{ au lieu de } 2.(\log_2)-1$$

Lorsque le détecteur détectera une information sur la voie du code spécial, il saura que l'information MOK est identique sur les deux voies utilisées. Exemples numériques dans le cas QPSK :

| P=8, | N=2 | m=2(3+2)=**10 bits/symb** |
|------|-----|---------------------------|
| P=16, | N=2 | m-2(4+2)=**12 bits/symb.** |

## Revendications

1.  Procédé de transmission de données, dans lequel :

    a) à l'émission :

    - on divise (2) les données à transmettre (m) en N blocs de données ($B_1$, $B_2$, ..., $B_N$),
    - on traite en parallèle ces N blocs dans N voies ($4_1$, $4_2$, ..., $4_N$) de modulation orthogonale d'ordre M (MOK), chaque voie de modulation utilisant une famille de codes d'étalement distincte, chaque voie délivrant un signal ($S_1$, $S_2$, ..., $S_N$),
    - on émet en série (5) l'ensemble de ces signaux (S),

    b) à la réception :

    - on traite en parallèle le signal reçu (R) dans N voies de démodulation orthogonale d'ordre M (MOK) ($11_1$, $11_2$, ..., $11_N$) ce qui donne N blocs de données ($B_1$, $B_2$, ..., $B_N$),
    - on regroupe en série ces N blocs de données (15) pour restituer les données transmises (m).

2.  Procédé selon la revendication 1, dans lequel la modulation et la démodulation consistent en une modulation et une démodulation bi-orthogonale d'ordre M (MBOK).

3.  Procédé selon la revendication 1, dans lequel la modulation et la démodulation consistent en une modulation et une démodulation orthogonale d'ordre M (MOK) combinées à une modulation et une démodulation de phase (PSK).

4.  Procédé selon la revendication 3, dans lequel la modulation et la démodulation de phase consistent en une modulation et une démodulation différentielle de phase (DPSK).

5.  Procédé selon l'une quelconque des revendications 1 à 4, dans lequel le nombre de codes d'étalement est le même dans chaque famille.

6.  Procédé selon l'une quelconque des - revendications 1 à 5, dans lequel les codes d'étalement utilisées sont tous différents d'une famille à l'autre et les nombres de codes sont égaux à des puissances de 2.

7.  Procédé selon l'une quelconque des revendications 1 à 5, dans lequel certains codes d'étalement sont utilisés dans plusieurs familles.

8.  Emetteur pour la mise en oeuvre de la phase émission du procédé selon la revendication 1, comprenant :

    - des moyens (2) pour diviser les données à transmettre (m) en N blocs de données ($B_1$, $B_2$, ..., $B_N$),
    - des moyens ($4_1$, $4_2$, ..., $4_N$) pour traiter ces N blocs en parallèle dans N voies de modulation orthogonale d'ordre M (MOK), chaque voie de modulation utilisant une famille de codes d'étalement distincte, chaque voie délivrant un signal ($S_1$, $S_2$, ..., $S_N$),
    - des moyens (5) pour émettre en série ces N signaux (S).

9.  Emetteur selon la revendication 8, dans lequel la modulation est une modulation bi-orthogonale d'ordre M (MBOK).

10. Emetteur selon la revendication 8, dans lequel la modulation est une modulation orthogonale d'ordre M (MOK) combinée à une modulation de phase (PSK).

11. Emetteur selon la revendication 10, dans lequel la modulation de phase est une modulation différentielle de phase (DPSK).

**12.** Récepteur pour la mise en oeuvre de la phase réception du procédé selon la revendication 1, comprenant :

■ des moyens ($11_1$, $11_2$, ..., $11_N$) ($12_1$, $12_2$, ..., $12_N$) (13) ($14_1$, $14_2$, ..., $14_N$) pour traiter en parallèle le signal reçu (R) dans N voies de démodulation orthogonale d'ordre M (MOK) ce qui donne N blocs de données ($B_1$, $B_2$, ..., $B_N$),
■ des moyens (15) pour regrouper ces N blocs de données en série et restituer les données transmises (m).

**13.** Récepteur selon la revendication 12, dans lequel la démodulation est une démodulation bi-orthogonale d'ordre M (MBOK).

**14.** Récepteur selon la revendication 12, dans lequel la démodulation est une démodulation orthogonale d'ordre M (MOK) combinée à une démodulation de phase (PSK).

**15.** Récepteur selon la revendication 14, dans lequel la démodulation de phase est une démodulation différentielle de phase (DPSK).


**Claims**

**1.** Data transmission process, wherein:

a) at transmission:

- the data to be transmitted (m) is divided (2) into N data blocks ($B_1$, $B_2$, ..., $B_N$),
- these N blocks are processed in parallel in N M-ary orthogonal keying (MOK) modulation channels ($4_1$, $4_2$, ..... $4_N$), each modulation using a group of spread codes, each channel emitting a signal ($S_1$, $S_2$, ..., $S_N$),
- all these signals (S) are transmitted in series (5),

b) at reception:

- the signal received (R) is processed in N M-ary orthogonal keying (MOK) demodulation channels ($11_1$, $11_2$, .... $11_N$), giving N data blocks ($B_1$, $B_2$, ...., $B_N$),
- said N data blocks (15) are grouped together in series to reproduce the transmitted data (m).

**2.** Process according to claim 1, wherein the modulation and demodulation consist of M-ary bi-orthogonal keying (MBOK) modulation and demodulation.

**3.** Process according to claim 1, wherein the modulation and demodulation consist of M-ary orthogonal keying (MOK) modulation and demodulation combined with phase shift keying (PSK) modulation and demodulation.

**4.** Process according to claim 3, wherein the phase shift keying modulation and demodulation consist of differential phase shift keying (DPSK) modulation and demodulation.

**5.** Process according to any of claims 1 to 4, wherein the number of spread codes is the same in each group.

**6.** Process according to any of claims 1 to 5, wherein the spread codes used are all different from one group to another and the code numbers are equal to powers of 2.

**7.** Process according to any of claims 1 to 5, wherein certain spread codes are used in several groups.

**8.** Transmitter for the implementation of the transmission phase of the process according to claim 1 comprising:

- means (2) to divide the data to be transmitted (m) into N data blocks ($B_1$, $B_2$, ..., $B_N$),
- means ($4_1$, $4_2$, ..... $4_N$) to process these N blocks in parallel in N M-ary orthogonal keying (MOK) modulation channels, each modulation using a group of spread codes, each channel emitting a signal ($S_1$, $S_2$, ..., $S_N$),
- means (5) to transmit these N signals (S) in series.

**9.** Transmitter according to claim 8, wherein the modulation is an M-ary bi-orthogonal keying (MBOK) modulation.

**10.** Transmitter according to claim 8, wherein the modulation is an M-ary orthogonal keying (MOK) modulation combined with a phase shift keying (PSK) modulation.

**11.** Transmitter according to claim 10, wherein the phase shift keying modulation is a differential phase shift keying (DPSK) modulation.

**12.** Receiver for the implementation of the reception phase of the process according to claim 1, comprising:

- means ($11_1$, $11_2$, .... $11_N$)($12_1$, $12_2$, ... $12_N$)(13)($14_1$, $14_2$, .... $14_N$) to process the signal received (R) in parallel in N M-ary orthogonal keying (MOK) demodulation channels, giving N data blocks ($B_1$, $B_2$, ...., $B_N$),
- means (15) to group these N data blocks together in series and reproduce the transmitted data (m).

**13.** Receiver according to claim 12, wherein the demodulation is an M-ary bi-orthogonal keying (MBOK) demodulation.

**14.** Receiver according to claim 12, wherein the demodulation is an M-ary orthogonal keying (MOK) demodulation combined with a phase shift keying (PSK) demodulation.

**15.** Receiver according to claim 14, wherein the phase shift keying demodulation is a differential phase shift keying (DPSK) demodulation.

**Patentansprüche**

**1.** Datenübertragungsverfahren, bei dem:

a) beim Senden:

- man die zu übertragenden Daten (m) in N Datenblöcke ($B_1$, $B_2$, ..., $B_N$) unterteilt (2),
- man diese N Blöcke parallel verarbeitet in N Kanälen ($4_1$, $4_2$, ..., $4_N$) zur orthogonalen Modulation M-ter Ordnung (MOK), wobei jeder Modulationskanal eine Gruppe unterschiedlicher Spreizcodes verwendet und jeder Kanal ein Signal ($S_1$, $S_2$, ..., $S_N$) liefert,
- man die Gesamtheit dieser Signale (S) in Serie sendet (5),

b) beim Empfangen:

- man das empfangene Signal (R) parallel verarbeitet in N Kanälen zur orthogonalen Demodulation M-ter Ordung (MOK) ($11_1$, $11_2$, ..., $11_N$), was N Datenblöcke ($B_1$, $B_2$, ..., $B_N$) ergibt,
- man diese N Datenblöcke in Serie zusammenfasst (15), um die übertragenen Daten auszugeben (m).

**2.** Verfahren nach Anspruch 1, bei die Modulation und die Demodulation aus einer biorthogonalen Modulation und Demodulation M-ter Ordnung (MBOK) besteht.

**3.** Verfahren nach Anspruch 1, bei dem die Modulation und die Demodulation aus einer orthogonalen Modulation und Demodulation M-ter Ordnung (MOK) kombiniert mit einer Phasenmodulation und -demodulation (PKS) besteht.

**4.** Verfahren nach Anspruch 3, bei dem die Phasenmodulation und -demodulation aus einer Differential- bzw. Konsekutivphasenmodulation und -demodulation (DPSK) besteht.

**5.** Verfahren nach einem der Ansprüche 1 bis 4, bei dem die Anzahl der Spreizcodes in jeder Gruppe dieselbe ist.

**6.** Verfahren nach einem der Ansprüche 1 bis 5, bei dem die verwendeten Spreizcodes alle verschieden sind von einer Gruppe zur anderen und die Anzahlen der Codes gleich Potenzen von 2 sind.

**7.** Verfahren nach einem der Ansprüche 1 bis 5, bei dem bestimmte Spreizcodes in mehreren Gruppen verwendet werden.

8. Sender zur Durchführung der Sendephase des Verfahrens nach Anspruch 1, umfassend:

■ Einrichtungen (2) zum Unterteilen der zu übertragenden Daten (m) in N Datenblöcke ($B_1$, $B_2$, ..., $B_N$),
■ Einrichtungen ($4_1$, $4_2$, ..., $4_N$), um diese N Blöcke parallel zu verarbeiten in N Kanälen zur orthogonalen Modulation M-ter Ordnung (MOK), wobei jeder Modulationskanal eine Gruppe unterschiedlicher Spreizcodes verwendet und jeder Kanal ein Signal ($S_1$, $S_2$, ..., $S_N$) liefert,
■ Einrichtungen (5), um diese N Signale (S) in Serie zu senden.

9. Sender nach Anspruch 8, bei dem die Modulation eine bi-orthogonale Modulation M-ter Ordnung (MBOK) ist.

10. Sender nach Anspruch 8, bei dem die Modulation eine orthogonale Modulation M-ter Ordnung (MOK) kombiniert mit einer Phasenmodulation (PKS) ist.

11. Verfahren nach Anspruch 10, bei dem die Phasenmodulation eine Differential- bzw. Konsekutivphasenmodulation (DPSK) ist.

12. Empfänger zur Durchführung der Empfangsphase des Verfahrens nach Anspruch 1, umfassend:

■ Einrichtungen ($11_1$, $11_2$, ..., $11_N$), ($12_1$, $12_2$, ..., $12_N$) (13) ($14_1$, $14_2$, ..., $14_N$) um das empfangene Signal (R) parallel zu verarbeiten in N Kanälen zur orthogonalen Demodulation M-ter Ordnung (MOK), was N Datenblöcke ($B_1$, $B_2$, ..., $B_N$) ergibt,
■ Einrichtungen (15), um diese N Datenblöcke in Serie zusammenzufassen und die übertragenen Daten auszugeben (m).

13. Empfänger nach Anspruch 12, bei dem die Demodulation eine bi-orthogonale Demodulation M-ter Ordnung (MBOK) ist.

14. Empfänger nach Anspruch 12, bei dem die Demodulation eine orthogonale Demodulation M-ter Ordnung (MOK) kombiniert mit einer Phasendemodulation (PSK) ist.

15. Empfänger nach Anspruch 14, bei dem die Phasendemodulation eine Differential- bzw. Konsekutivphasendemodulation (DPSK) ist.

FIG. 1

FIG. 2

FIG. 3

FIG. 4

FIG. 5

FIG. 6